# EUROPÄISCHE PATENTSCHRIFT

(11) **EP 2 924 589 B1**
(45) Veröffentlichungstag und Bekanntmachung des Hinweises auf die Patenterteilung: **15.03.2017**
(21) Anmeldenummer: 14161989.0
(22) Anmeldetag: 27.03.2014
(51) Int. Cl.: G06F 17/30, G07B 15/06, G01C 21/32

(54) **Onboard-Unit und Verfahren zum Aktualisieren von Geodaten darin**
Onboard unit and method for updating geodata therein
Unité embarquée et procédé d'actualisation de géo-données à l'intérieur de celle-ci

(43) Veröffentlichungstag der Anmeldung: 30.09.2015
(73) Patentinhaber: Kapsch TrafficCom AG, 1120 Wien (AT)
(72) Erfinder: Kalan, Manfred, 9020 Klagenfurt (AT)
(74) Vertreter: Weiser, Andreas

(56) Entgegenhaltungen:
- WO-A1-2009/102284
- WO-A2-2011/068698
- US-A1- 2011 004 583
- US-A1- 2013 013 557

## Beschreibung

Die vorliegende Erfindung betrifft eine Onboard-Unit zur Vermautung eines Fahrzeugs, mit einem Satellitennavigationsempfänger zur Erzeugung von Positionsfixen, einem Speicher zur Aufnahme von Geoobjekten, einer Funkschnittstelle und einem an diese Komponenten angeschlossenen Prozessor, der dafür ausgebildet ist, aus einem geographischen Vergleich von Positionsfixen mit Geoobjekten in einer digitalen Landkarte Mautdaten zu erzeugen und über die Funkschnittstelle zu senden. Die Erfindung betrifft ferner ein Verfahren zum Aktualisieren von Geodaten in einer solchen Onboard-Unit.

Onboard-Units (OBUs) auf Basis von Satellitennavigationssystemen (global navigation satellite systems, GNSS) verwenden als Funkschnittstelle meist ein Mobilfunkmodul für terrestrische Mobilfunknetwerke (public land mobile networks, PLMN) und werden daher auch als GNSS/PLMN-OBUs bezeichnet.

Eine solche OBU ist zum Beispiel aus der WO 2009/102284 A1 (Logina D.O.O) bekannt.

Für den genannten geografischen Vergleich ("map matching") der GNSS-Positionsfixe mit den in der OBU hinterlegten Geoobjekten ist ein rasches Auffinden der jeweils nächstliegenden Geoobjekte erforderlich. Dazu werden derzeit verschiedenste geografische bzw. zweidimensionale Indizes eingesetzte, wie Quad-Trees, R-Trees oder kd-Trees und deren Abwandlungen, siehe beispielsweise Hanan Samet, "Foundations of Multidimensional and Metric Data Structures", Morgan Kaufmann, 2006; M. deBerg et al., "Computational Geometry - Algorithms and Applications", Springer, 1997; oder Yannis Manolopoulos et al., "R-Trees: Theory & Applications", Springer, 2006. Indexbäume dieser Art werden auf das zu durchsuchende Datenfeld hin optimiert ("ausbalanciert"), um die mittlere Zugriffszeit auf die an den Astenden des Baumes angeordneten Geoobjekte zu minimieren. Indexbaum und Geoobjekte sind daher aufeinander abgestimmt, was für die Aktualisierung einzelner Geoobjekte in der Regel bedeutet, dass auch der Index neu berechnet werden muss. Dies erfordert entweder die Übertragung größerer Datenmengen über die Funkschnittstelle, wenn die Berechnung zentral erfolgt, oder eine höhere Rechenleistung in den OBUs, wenn diese die Berechnung dezentral durchführen, was beides Probleme bei der Aktualisierung von Geoobjekten und ihrer Indizes bereitet. Die Erfindung setzt sich zum Ziel, eine Lösung für diese Probleme zu schaffen.

In einem ersten Aspekt wird dieses Ziel mit einer Onboard-Unit der eingangs genannten Art erreicht, die sich erfindungsgemäß dadurch auszeichnet, dass der Speicher aufweist:
einen Index-Speicherbereich, in dem ein Indexbaum für Geoobjekte gespeichert ist, dessen äußerste Äste jeweils einer Zelle der digitalen Landkarte zugeordnet sind und ein Blatt mit Kennungen von Geoobjekten dieser Zelle tragen,
einen ersten statischen Objekt-Speicherbereich, in dem eine Primärliste mit Geoobjekten und deren Kennungen gespeichert ist, und
einen zweiten über die Funkschnittstelle dynamisch beschreibbaren Objekt-Speicherbereich, in dem zumindest eine Sekundärliste mit Geoobjekten und deren Kennungen gespeichert ist;
wobei zumindest ein Blatt des Indexbaums einen Verweis auf eine Sekundärliste enthält; und
wobei der Prozessor dafür ausgebildet ist, beim Zugriff auf ein Geoobjekt über ein Blatt, wenn dieses einen Verweis auf eine Sekundärliste enthält, die Sekundärliste vorrangig vor der Primärliste zu verwenden.

In einem zweiten Aspekt schafft die Erfindung dazu ein Verfahren zum Aktualisieren von Geodaten in einer solchen Onboard-Unit, umfassend:
Erstellen einer Sekundärliste in einer Zentrale,
Senden der Sekundärliste, ohne Indexbaum und ohne Primärliste, von der Zentrale an die Onboard-Unit und Empfangen der Sekundärliste in der Onboard-Unit über die Funkschnittstelle.

Gemäß der Erfindung werden die in der OBU vorzuhaltenden Geoobjekte in einen Stammsatz ("Primärliste") von statisch gespeicherten Geoobjekten und einen Update-Satz ("Sekundärliste") von dynamisch aktualisierbaren Geoobjekten unterteilt, wobei zum Aktualisieren nur letzter über die Funkschnittstelle übertragen zu werden braucht, weil der Indexbaum in der erfindungsgemäßen Art und Weise mit Referenzen bzw. Verweisen auf die Sekundärliste ausgestattet wird. Dies spart einerseits beträchtliche Bandbreite für die Aktualisierung über die Funkschnittstelle, weil weder der Indexbaum noch die umfangreiche Primärliste übertragen werden müssen, und andererseits braucht der Indexbaum in der OBU nicht neu berechnet zu werden, was hohe Rechenleistung in der OBU erübrigt.

Um das Einspeichern der aktualisierten Sekundärliste(n) in der OBU zu erleichtern, kann bevorzugt mit jeder Sekundärliste eine Kennung jenes Astes, welcher das Blatt mit dem Verweis auf diese Sekundärliste trägt, mitgesendet werden, und die Sekundärliste wird an der von diesem Verweis angegebenen Stelle im zweiten Objekt-Speicherbereich gespeichert.

Gemäß weiteren bevorzugten Ausführungsformen der Erfindung können in der OBU entweder für zumindest zwei Blätter jeweils eine eigene Sekundärliste im zweiten Objekt-Speicherbereich gespeichert werden, was die Verwaltung und Berechnung der Sekundärlisten erleichtert, oder zumindest zwei Blätter können auf dieselbe Sekundärliste verweisen, was den erforderlichen Speicherplatz in der OBU minimiert.

Mit Hilfe der Sekundärliste(n) können Geoobjekt in der OBU eingefügt, gelöscht oder aktualisiert werden, ohne den Indexbaum und die Primärliste übertragen oder neuberechnen zu müssen. Für Löschoperationen wird in der OBU bevorzugt zumindest ein Geoobjekt in der Sekundärliste mit einem Gelöscht-Flag versehen und der Prozessor ist dafür ausgebildet, beim Zugriff auf ein Geoobjekt, dessen Gelöscht-Flag gesetzt, dieses zu ignorieren. Einfügeoperationen können einfach durch Einfügen eines neuen Geoobjekts in die Sekundärliste durchgeführt werden, und Aktualisierungsoperationen optional durch eine Kombination daraus, nämlich Löschen der alten Version des Geoobjekts mit Hilfe des Gelöscht-Flags und Einfügen der neuen Version desselben Geoobjekts.

In ein Blatt des Indexbaums können auch mehr als ein neues Geoobjekt eingefügt werden, indem in der Sekundärliste, auf welche dieses Blatt verweist, diese Mehrzahl von eingefügten Geoobjekten verkettet gespeichert wird. Dazu enthält bevorzugt zumindest ein Geoobjekt der Sekundärliste die Kennung eines weiteren Geoobjekts der Sekundärliste.

Dieses Konzept der verketteten Speicherung von Geoobjekten kann auch in der Primärliste verwendet werden, um Speicherplatz in den Blättern des Indexbaums zu sparen, indem zumindest ein Geoobjekt der Primärliste die Kennung eines weiteren Geoobjekts der Primärliste enthält.

Die Verwaltung des dynamisch beschreibbaren Objekt-Speicherbereichs für die Sekundärliste kann vereinfacht werden, wenn bevorzugt die Geoobjekte in der Sekundärliste alle gleich groß sind. Dadurch können bei der Aktualisierung der Sekundärliste einzelne Geoobjekte darin einfach überschrieben werden.

Die Onboard-Unit und das Verfahren der Erfindung sind für jede Art von geografischem Index geeignet, beispielsweise die eingangs erläuterten Strukturen wie Quad-Tress, R-Trees oder kd-Trees. Besonders bevorzugt ist der Indexbaum ein ausbalancierter Quad-Tree, welcher sich für das Aufsuchen nächstliegender Geoobjekte beim Kartenabgleich (map matching) besonders gut eignet.

Die Erfindung wird nachstehend anhand von in den beigeschlossenen Zeichnungen dargestellten Ausführungsbeispielen näher erläutert. In den Zeichnungen zeigt:
Fig. 1 eine digitale Landkarte mit Geoobjekten und einem Quad-Tree-Indexbaum zu deren Auffindung;
Fig. 2 den Quad-Tree-Indexbaum von Fig. 1 in einer anderen schematischen Darstellungsweise;
Fig. 3 ein Blockschaltbild der erfindungsgemäßen Onboard-Unit zur Durchführung des Verfahrens der Erfindung in Verbindung mit einem Satellitennavigationssystem und einer Zentrale eines Straßenmautsystems; und
Fig. 4 den internen Aufbau des Speichers der Onboard-Unit von Fig. 3.

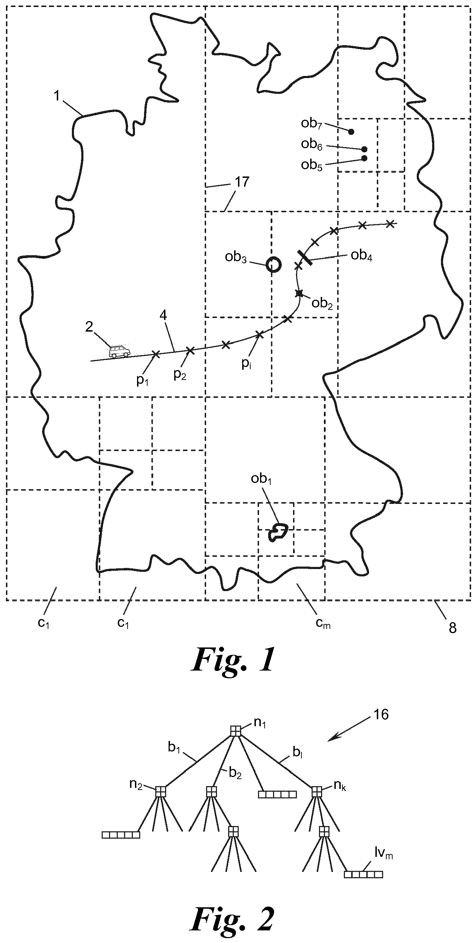

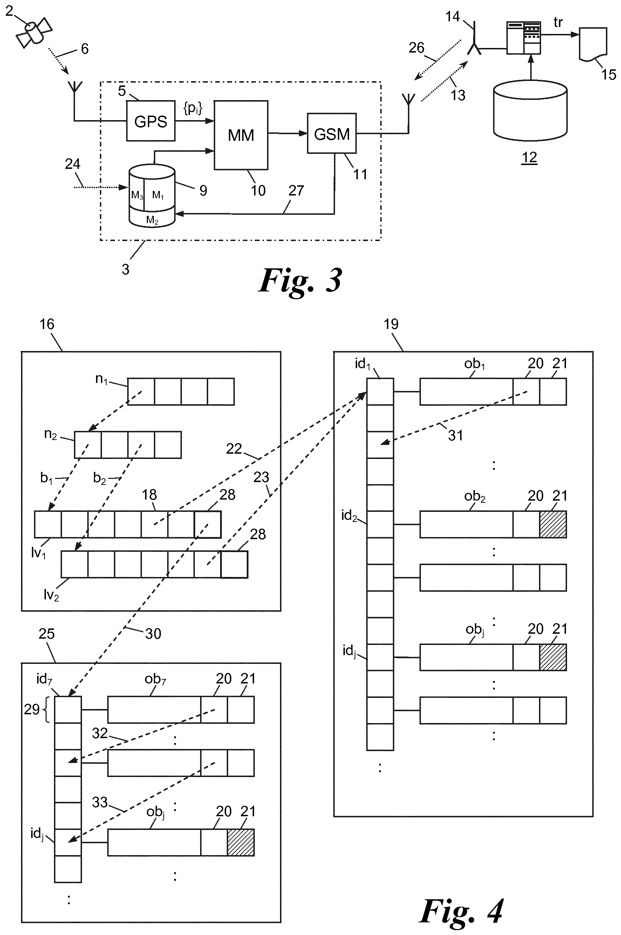

Fig. 1 zeigt ein geografisches Gebiet 1, in dem sich ein Fahrzeug 2 mit einer Onboard-Unit (OBU) 3 auf einem beispielhaften Weg 4 bewegt. Zur Ermittlung des Weges 4 für Vermautungszwecke ist die OBU 3 mit einem Satellitennavigationsempfänger 5 ausgestattet, siehe Fig. 3, welcher Satellitennavigationsdaten 6 von einem globalen Satellitennavigationssystem (global navigation satellite system, GNSS) 7 empfängt und daraus fortlaufend Positionsfixe p₁, p₂, ..., allgemein pᵢ, erzeugt.

Fig. 1 zeigt gleichzeitig eine digitale Landkarte 8 des geografischen Gebiets 1, in welcher Geoobjekte ob₁, ob₂, ..., allgemein obⱼ, von realen geografischen Objekten des geografischen Bereichs 1 gespeichert sind. Beispiele von Geoobjekten obⱼ sind Gebietsumrandungen wie Stadtgrenzen, Parkplatzgrenzen, Innenstadtgrenzen usw. (siehe ob₁, ob₃), Übertritte wie Ländergrenzen, Ein- oder Ausfahrtsgrenzen, Schranken usw. (siehe ob₄), oder Passagepunkte wie Orte, "virtuelle Mautstellen", Kontrollpunkte usw. (siehe ob₂, ob₅, ob₆, ob₇). Die Geoobjekte obⱼ sind in einem internen Speicher 9 der OBU 3 gespeichert, dessen Aufbau später anhand von Fig. 4 noch ausführlicher erläutert wird.

Ein interner Prozessor 10 der OBU 3 vergleicht fortlaufend die Folge {pᵢ} von Positionsfixen pᵢ mit den im Speicher 9 gespeicherten Geoobjekten obⱼ, um das bzw. die jeweils nächstliegende(n) Geoobjekt(e) obⱼ zu ermitteln und daraus das Passieren z.B. einer Grenze, Mauterhebungsstelle, eines Kontrollpunkts, den Aufenthalt in einem bestimmten Gebiet oder auf einem bestimmten Straßenabschnitt usw. zu detektieren. Das Ergebnis dieses geografischen Vergleichs ("map matching") dient als Grundlage für die Erzeugung entsprechender Mautdaten tr, die vom Prozessor 10 anschließend über eine Funkschnittstelle 11 der OBU 3 an eine entfernte Zentrale 12 zur Auswertung bzw. Vermautung des Weges 4 des Fahrzeugs 2 gesandt werden (Pfeil 13).

Die Funkschnittstelle 11 ist beispielsweise ein Mobilfunkmodul für ein Mobilfunknetz 14, z.B. nach einem 3G-, 4G- oder 5G-Funknetzstandard wie GSM, UMTS oder LTE, über welches die Zentrale 12 mit der OBU 3 in Verbindung steht. Die Zentrale 12 kann aus den empfangenen Mautdaten tr entsprechende Wege bzw. Mautprotokolle 15 zur Vermautung der Ortsnutzungen des Fahrzeugs 2 erzeugen, wie in der Technik bekannt.

Zur raschen Auffindung des bzw. der nächstliegenden Geoobjekte(s) obⱼ zu einem oder mehren Positionsfixen pᵢ werden die Geoobjekte obⱼ in der digitalen Landkarte 8 bzw. dem Speicher 9 der OBU 3 indexiert, und zwar mit einem hierarchischen Index in Form eines Indexbaums 16, der in den Fig. 1, 2 und 4 in verschiedenen Darstellungsweisen veranschaulicht ist.

Der Indexbaum 16 ist bevorzugt ein geografischer, d.h. zweidimensionaler Index von der Art eines Quad-Tree, R-Tree, kd-Tree od.dgl. und die Fig. 1, 2 und 4 zeigen die spezielle Ausführungsform eines Quad-Tree, bei dem jeder Knoten n₁, n₂, ..., allgemein nₖ, auf jeweils vier Äste b₁, b₂, ..., allgemein b₁, verzweigt, welche an ihren Enden jeweils über weitere Knoten nₖ zu weiteren Ästen b₁ verzweigen oder auch nicht.

Die äußersten, vom "Ursprungs"-Knoten (der Wurzel) n₁ des Indexbaums 16 am weitesten entfernten Äste b₁ sind jeweils einer Zelle c₁, c₂, ..., allgemein cₘ, der digitalen Landkarte 8 zugeordnet und tragen ein "Blatt" lv₁, lv₂, ..., allgemein lvₘ, welches die in dieser Zelle cₘ enthaltenen Geoobjekte obⱼ enthält bzw. referenziert, wie später noch anhand von Fig. 4 erläutert wird.

Fig. 1 veranschaulicht, dass ein solcher Quad-Tree-Indexbaum 16 die digitale Landkarte 8 in sich sukzessive verschachtelnd kleinere Zell-Quadrupel unterteilt. Die geografischen Unterteilungslinien 17 zwischen den Zellen cₘ - und damit die Äste b₁ und Knoten nₖ des Indexbaums 16 - werden so gewählt, dass eine möglichst gleichmäßige Verteilung der Anzahl an Geoobjekten obⱼ über die Blätter lvₘ bzw. Zellen cₘ erreicht wird. Dies minimiert die mittlere Zugriffszeit auf die Geoobjekte obⱼ beim Durchsuchen des Indexbaums 16, wie dem Fachmann bekannt.

Fig. 4 zeigt eine andere Darstellung desselben Indexbaums 16 mit (hier beispielhaft) zwei Knoten n₁, n₂, von denen der hierarchisch untere Knoten n₂ auf zwei beispielhaft dargestellte Äste b₁ und b₂ mit jeweils einem Blatt lv₁, lv₂ verzweigt. Jedes Blatt lvₘ umfasst eine begrenzte Anzahl von Speicherzellen 18 für Objektkennungen idⱼ von Geoobjekten obⱼ, die in einer ersten Liste bzw. "Primärliste" 19 von Geoobjekten obⱼ gespeichert sind.

Jedes Geoobjekt obⱼ der Primärliste 19 ist darin mit seiner Objektkennung idⱼ gespeichert und kann zusätzlich ein Verkettungsfeld 20 und ein Gelöscht-Flag 21 enthalten, auf deren Funktionen später noch eingegangen wird. Jede Speicherzelle 21 eines Blattes lvₘ, die eine Objektkennung idⱼ speichert, verweist somit auf ein Geoobjekt obⱼ der Primärliste 19, siehe z.B. Verknüpfung 22. Zwei Blätter lv₁, lv₂ können auch auf ein und dasselbe Geoobjekt obⱼ der Primärliste 19 verweisen, wie durch die beiden Verknüpfungen 22, 23 gezeigt.

Der Indexbaum 16 und die Primärliste 19 können beispielsweise bei der Auslieferung der OBU 3 an den Benutzer in den Speicher 9 der OBU 3 eingespeichert werden, siehe Pfeil 24. Da die Primärliste 19 bei einem großen geografischen Gebiet 1 eine sehr große Anzahl von Geoobjekten obⱼ enthalten kann, beispielsweise tausende oder zehntausende von Geoobjekten obⱼ, ist die Primärliste 19 sehr umfangreich und der Aufbau eines ausbalancierten Indexbaums 16 sehr aufwendig, und eine Aktualisierung im laufenden Betrieb über die Funkschnittstelle 11 ist aus den eingangs genannten Gründen nicht praktikabel. Selbst wenn nur wenige Geoobjekte obⱼ über die Funkschnittstelle 11 übertragen würden, ist eine Neuberechnung des Indexbaums 16, um diesen für die Zugriffszeitminimierung auszubalancieren, mit einer begrenzten Rechenleistung in der OBU 3 schwer durchführbar. Zur Minimierung des Aktualisierungs- und Berechnungsaufwands des Indexbaums 16 und der Geoobjekte obⱼ dient die nachfolgend beschriebene Erweiterung des geschilderten Systems.

Der Speicher 9 der OBU 3 ist in einen ersten statischen Objekt-Speicherbereich M₁, welcher die Primärliste 19 enthält, und einen zweiten dynamischen Objekt-Speicherbereich M₂ aufgeteilt, welcher eine zweite Liste bzw. "Sekundärliste" 25 mit dynamisch aktualisierbaren Geoobjekten obⱼ enthält. Der Indexbaum 16 ist in einem gesonderten statistischen Index-Speicherbereich M₃ des Speichers 9 gespeichert. Unter dem Begriff einer "statischen" Speicherung des Indexbaums 16 und der Primärliste 19 in den Speicherbereichen M₁ und M₃ wird eine nur einmal oder selten wiederholte Einspeisung über den Datenpfad 24 verstanden. Unter dem Begriff einer "dynamischen" Speicherung der Sekundärliste 25 im Objekt-Speicherbereich M₂ wird eine Einspeisung von der Zentrale 12 her über die Funkschnittstelle 11 im laufenden Betrieb der OBU 3 (siehe Datenpfade 26, 27) verstanden.

Die Blätter lvₘ des Indexbaums 16 sind zusätzlich jeweils mit einem Verweisfeld 28 auf einen Eintrag 29 in der Sekundärliste 25 versehen, welcher Eintrag 29 - wie in der Primärliste 19 - eine Kennung idⱼ eines Geoobjekts obⱼ, dieses Geoobjekt obⱼ sowie (optional) ein Verkettungsfeld 20 und ein Gelöscht-Flag 21 enthält. Das Verweisfeld 28 des Blattes lvₘ speichert z.B. direkt die Objektkennung idⱼ des Geoobjekts obⱼ des Eintrags 29 der Sekundärliste 25, was eine Verknüpfung 30 herstellt.

Wenn der Prozessor 10 der OBU 3 beim genannten Map Matching und dazu Durchsuchen des Indexbaums 16 auf ein Blatt lvₘ stößt, in dessen Verweisfeld 28 eine Objektkennung idⱼ gespeichert ist, entnimmt er das so referenzierte Objekt obⱼ anstelle der Primärliste 19 der Sekundärliste 25 der die Sekundärliste 25 wird vorrangig vor der Primärliste 19 betreffend ein und dasselbe Geoobjekt obⱼ verwendet.

Wenn in der Primärliste 19 kein derartiges Objekt obⱼ vorhanden war, entspricht das Auffinden des Objekts obⱼ in der Sekundärliste 25 einem "Einfügen" eines neuen Geoobjekts obⱼ in ein Blatt lvₘ und den Bestand an Geoobjekten obⱼ in der OBU 3. Wenn ein in der Sekundärliste 25 aufgefundenes Geoobjekt obⱼ der Kennung idⱼ auch in der Primärliste 19 vorhanden war, entspricht dies einem "Ersetzen". Das Gelöscht-Flag 21 eines Geoobjekts obⱼ in der Sekundärliste 25 (und überdies auch in der Primärliste 19) kann dazu verwendet werden, ein "Löschen" eines Geoobjekts obⱼ zu realisieren, indem das Gelöscht-Flag 21 gesetzt wird und der Prozessor 10 beim Map Matching Geoobjekte obⱼ mit gesetztem Flag 21 ignoriert. Ein "Ersetzen" kann im übrigen auch dadurch realisiert werden, dass ein Geoobjekt obⱼ mit der Kennung idⱼ zunächst gelöscht und dann neu eingefügt wird.

Für jedes Blatt lvₘ des Indexbaums 16 kann eine eigene Sekundärliste 25 im zweiten Objekt-Speicherbereich M₂ angelegt werden, oder es kann eine gemeinsame Sekundärliste 27 für alle (oder zumindest mehrere) Blätter lvₘ verwendet werden.

Die Verkettungsfelder 20 in den Primär- und Sekundärlisten 19, 25 können dazu verwendet werden, von einem über die Verknüpfungen 22, 23, 30 aufgefundenen Geoobjekt obⱼ auf ein anderes Geoobjekt obⱼ in der jeweiligen Primär- bzw. Sekundärliste 19, 25 weiterzuverweisen, siehe die Verkettungen 31, 32, 33. Dadurch kann z.B. mit Hilfe eines einzigen Verweises 30 von einem Blatt lvₘ aus auf die Sekundärliste 25 bzw. einen Eintrag 29 darin auf eine ganze Reihe von neu eingefügten, aktualisierten oder zu löschenden Geoobjekten obⱼ referenziert werden, d.h. diese dem Blatt lvₘ zugeordnet werden. Eine Veränderung des Blattes lvₘ im Indexbaum 16 - und damit im statischen Index-Speicherbereich M₃ - ist dazu nicht erforderlich, so dass hiermit gleichsam auch der Indexbaum 16 aktualisiert wird. Die Sekundärliste 25 ermöglicht dadurch eine dynamische Aktualisierung gleichzeitig sowohl des Indexbaums 16 im Index-Speicherbereich M₁ als auch der Primärliste 19 im ersten Objekt-Speicherbereich M₂.

Zum raschen Einspeichern einer über die Funkschnittstelle 11 in der OBU 3 empfangenen Sekundärliste 25 kann mit jeder Sekundärliste 25 auch eine Kennung jenes Astes b₁, welcher das Blatt lvₘ mit dem Verweis 28 auf diese Sekundärliste 25 trägt, mitgesendet, und die Sekundärliste 25 an der von diesem Verweis 28 angegebenen Stelle im zweiten Objekt-Speicherbereich M₂ gespeichert werden.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Onboard-Unit zur Vermautung eines Fahrzeugs, mit:
einem Satellitennavigationsempfänger (5) zur Erzeugung von Positionsfixen (pᵢ) ;
einem Speicher (9) zur Aufnahme von Geoobjekten (obⱼ);
einer Funkschnittstelle (11); und
einem an diese Komponenten (5, 9, 11) angeschlossenen Prozessor (10), der dafür ausgebildet ist, aus einem geographischen Vergleich von Positionsfixen (pᵢ) mit Geoobjekten (obⱼ) in einer digitalen Landkarte (8) Mautdaten (tr) zu erzeugen und über die Funkschnittstelle (11) zu senden;
**dadurch gekennzeichnet, dass** der Speicher (9) aufweist:
einen Index-Speicherbereich (M₃), in dem ein Indexbaum (16) für Geoobjekte (obⱼ) gespeichert ist, dessen äußerste Äste (b₁) jeweils einer Zelle (cₘ) der digitalen Landkarte (8) zugeordnet sind und ein Blatt (lvₘ) mit Kennungen (idⱼ) von Geoobjekten (obⱼ) dieser Zelle (cₘ) tragen,
einen ersten statischen Objekt-Speicherbereich (M₁), in dem eine Primärliste (19) mit Geoobjekten (obⱼ) und deren Kennungen (idⱼ) gespeichert ist, und
einen zweiten über die Funkschnittstelle (11) dynamisch beschreibbaren Objekt-Speicherbereich (M₂), in dem zumindest eine Sekundärliste (25) mit Geoobjekten (obⱼ) und deren Kennungen (idⱼ) gespeichert ist;
wobei zumindest ein Blatt (lvₘ) des Indexbaums (16) einen Verweis (28) auf eine Sekundärliste (25) enthält; und
wobei der Prozessor (10) dafür ausgebildet ist, beim Zugriff auf ein Geoobjekt (obⱼ) über ein Blatt (lvₘ), wenn dieses einen Verweis (28) auf eine Sekundärliste (25) enthält, die Sekundärliste (25) vorrangig vor der Primärliste (19) zu verwenden.

2. Onboard-Unit nach Anspruch 1, **dadurch gekennzeichnet, dass** für zumindest zwei Blätter (lvₘ) jeweils eine eigene Sekundärliste (29) im zweiten Objekt-Speicherbereich (M₂) gespeichert ist.

3. Onboard-Unit nach Anspruch 1, **dadurch gekennzeichnet, dass** zumindest zwei Blätter (lvₘ) auf dieselbe Sekundärliste (25) verweisen.

4. Onboard-Unit nach einem der Ansprüche 1 bis 3, **dadurch gekennzeichnet, dass** zumindest ein Geoobjekt (obⱼ) in der Sekundärliste (25) mit einem Gelöscht-Flag (21) versehen und der Prozessor (10) dafür ausgebildet ist, beim Zugriff auf ein Geoobjekt (obⱼ), dessen Gelöscht-Flag (21) gesetzt ist, dieses zu ignorieren.

5. Onboard-Unit nach einem der Ansprüche 1 bis 4, **dadurch gekennzeichnet, dass** zumindest ein Geoobjekt (obⱼ) der Sekundärliste (25) die Kennung (idⱼ) eines weiteren Geoobjekts (obⱼ) der Sekundärliste (25) enthält.

6. Onboard-Unit nach einem der Ansprüche 1 bis 5, **dadurch gekennzeichnet, dass** zumindest ein Geoobjekt (obⱼ) der Primärliste (19) die Kennung (idⱼ) eines weiteren Geoobjekts (obⱼ) der Primärliste (19) enthält.

7. Onboard-Unit nach einem der Ansprüche 1 bis 6, **dadurch gekennzeichnet, dass** die Geoobjekte (obⱼ) in der Sekundärliste (25) alle gleich groß sind.

8. Onboard-Unit nach einem der Ansprüche 1 bis 7, **dadurch gekennzeichnet, dass** der Indexbaum (16) ein ausbalancierter Quad-Tree ist.

9. Verfahren zum Aktualisieren von Geodaten in einer Onboard-Unit nach einem der Ansprüche 1 bis 8, umfassend:
Erstellen einer Sekundärliste (25) mit Geoobjekten (obⱼ) und deren Kennungen (idⱼ) in einer Zentrale (12),
Senden der Sekundärliste (25), ohne Indexbaum (16) und ohne Primärliste (19), von der Zentrale (12) an die Onboard-Unit (3),
Empfangen der Sekundärliste (25) in der Onboard-Unit (3) über die Funkschnittstelle (11), und
Speichern der empfangenen Sekundärliste (25) im zweiten Objekt-Speicherbereich (M₂) der Onboard-Unit (3).

10. Verfahren nach Anspruch 9 in Verbindung mit Anspruch 2, **dadurch gekennzeichnet, dass** mit jeder Sekundärliste (25) auch eine Kennung jenes Astes (b₁), welcher das Blatt (lvₘ) mit dem Verweis (28) auf diese Sekundärliste (25) trägt, mitgesendet wird, und die Sekundärliste (25) an der von diesem Verweis (28) angegebenen Stelle im zweiten Objekt-Speicherbereich (M₂) gespeichert wird.

## Claims

1. An onboard unit for levying toll for a vehicle, comprising:
a satellite navigation receiver (5) for generating position fixes (pᵢ);
a memory (9) for recording geoobjects (obⱼ);
a radio interface (11); and
a processor (10) connected to these components (5, 9, 11), which is configured to generate toll data (tr) from a geographical comparison of position fixes (pᵢ) with geoobjects (obⱼ) in a digital map (8) and to transmit this data via the radio interface (11);
**characterised in that** the memory (9) has:
an index memory region (M₃), in which an index tree (16) for geoobjects (obⱼ) is stored, of which the outermost branches (b₁) are each assigned to a cell (cₘ) of the digital map (8) and carry a leaf (lvₘ) with identifiers (idⱼ) of geoobjects (obⱼ) of this cell (cₘ),
a first static object memory region (M₁), in which a primary list (19) with geoobjects (obⱼ) and identifiers (idⱼ) thereof is stored, and
a second object memory region (M₂), which can be written dynamically via the radio interface (11) and in which at least one secondary list (25) with geoobjects (obⱼ) and identifiers (idⱼ) thereof is stored;
wherein at least one leaf (lvₘ) of the index tree (16) contains a reference (28) to a secondary list (25); and
wherein the processor (10) is configured, upon accessing a geoobject (obⱼ) via a leaf (lvₘ), when this leaf contains a reference (28) to a secondary list (25), to use the secondary list (25) as a matter of priority before the primary list (19).

2. The onboard unit according to Claim 1, **characterised in that** a dedicated secondary list (29) for each of at least two leaves (lvₘ) is stored in the second memory region (M₂).

3. The onboard unit according to Claim 1, **characterised in that** at least two leaves (lvₘ) refer to the same secondary list (25).

4. The onboard unit according to one of Claims 1 to 3, **characterised in that** at least one geoobject (obⱼ) in the secondary list (25) is provided with a "deleted"-flag (21), and the processor (10) is configured, upon accessing a geoobject (obⱼ) of which the "deleted"-flag (21) is set, to ignore this geoobject.

5. The onboard unit according to one of Claims 1 to 4, **characterised in that** at least one geoobject (obⱼ) of the secondary list (25) contains the identifier (idⱼ) of a further geoobject (obⱼ) of the secondary list (25).

6. The onboard unit according to one of Claims 1 to 5, **characterised in that** at least one geoobject (obⱼ) of the primary list (19) contains the identifier (idⱼ) of a further geoobject (obⱼ) of the primary list (19).

7. The onboard unit according to one of Claims 1 to 6, **characterised in that** the geoobjects (obⱼ) in the secondary list (25) are all of identical size.

8. The onboard unit according to one of Claims 1 to 7, **characterised in that** the index tree (16) is a balanced quad-tree.

9. A method for updating geodata in an onboard unit according to one of Claims 1 to 8, comprising:
creating a secondary list (25) with geoobjects (obⱼ) and identifiers (idⱼ) thereof in a central unit (12),
transmitting the secondary list (25), without index tree (16) and without primary list (19), from the central unit (12) to the onboard unit (3),
receiving the secondary list (25) in the onboard unit (3) via the radio interface (11), and
storing the received secondary list (25) in the second object memory region (M₂) of the onboard unit (3).

10. The method according to Claim 9 in conjunction with Claim 2, **characterised in that** an identifier of the branch (b₁) carrying the leaf (lvₘ) with the reference (28) to this secondary list (25) is also transmitted with each secondary list (25), and the secondary list (25) is stored in the second object memory region (M₂) at the location specified by this reference (28).

## Revendications

1. Unité embarquée pour le prélèvement de péage d'un véhicule, avec :
un récepteur de navigation par satellite (5) pour la génération de relevés de position (pᵢ) ;
une mémoire (9) pour la réception d'objets géographiques (obⱼ) ;
une interface radio (11) ; et
un processeur (10) associé à ces composants (5, 9, 11), qui est conçu pour générer des données de péage (tr) à partir de la comparaison géographique de relevés de position (pᵢ) avec des objets géographiques (obⱼ) dans une carte (8) numérique et à les envoyer par l'intermédiaire de l'interface radio (11) ;
**caractérisée en ce que** la mémoire (9) présenté :
une partie de mémoire d'index (M₃), dans laquelle est mémorisé un arbre d'index (16) pour des objets géographiques (obⱼ) dont les branches les plus externes (b₁) sont chacune associée à une cellule (cₘ) de la carte (8) numérique et portent une feuille (lvₘ) avec des identifications (idⱼ) d'objets géographiques (obⱼ) de cette cellule (cₘ),
une première partie de mémoire d'objets (M₁) statique dans laquelle est mémorisée une liste primaire (19) avec des objets géographiques (obⱼ) et leurs identifications (idⱼ), et
une deuxième partie de mémoire d'objets (M₂) pouvant être décrite de manière dynamique par l'intermédiaire de l'interface radio (11), dans laquelle est mémorisée au moins une liste secondaire (25) avec des objets géographiques (obⱼ) et leurs identifications (idⱼ) ;
où au moins une feuille (lvₘ) de l'arbre d'index (16) contient un renvoi (28) vers une liste secondaire (25) ; et
où le processeur (10) est conçu pour employer la liste secondaire (25) en premier lieu avant la liste primaire (19) lors de l'accès à un objet (obⱼ) par l'intermédiaire d'une feuille (lvₘ), lorsque celle-ci contient un renvoi (28) sur la liste secondaire (25).

2. Unité embarquée selon la revendication 1, **caractérisée en ce que**, pour au moins deux feuilles (lvₘ), chaque fois, une propre liste secondaire (29) est mémorisée dans la deuxième partie de mémoire d'objets (M₂).

3. Unité embarquée selon la revendication 1, **caractérisée en ce qu'**au moins deux feuilles (lvₘ) renvoient sur la même liste secondaire (25).

4. Unité embarquée selon l'une des revendications 1 à 3, **caractérisée en ce qu'**au moins un objet géographique (obⱼ) dans la liste secondaire (25) est muni d'un drapeau d'effacement (21) et le processeur (10) est conçu pour ignorer, lors de l'accès à un objet géographique (obⱼ) dont le drapeau d'effacement (21) est activé, cet objet géographique.

5. Unité embarquée selon l'une des revendications 1 à 4, **caractérisée en ce qu'**au moins un objet géographique (obⱼ) de la liste secondaire (25) contient l'identification (idⱼ) d'un autre objet géographique (obⱼ) de la liste secondaire (25).

6. Unité embarquée selon l'une des revendications 1 à 5, **caractérisée en ce qu'**au moins un objet géographique (obⱼ) de la liste primaire (19) contient l'identification (idⱼ) d'un autre objet géographique (obⱼ) de la liste primaire (19).

7. Unité embarquée selon l'une des revendications 1 à 6, **caractérisée en ce que** les objets géographiques (obⱼ) dans la liste secondaire (25) sont tous de la même taille.

8. Unité embarquée selon l'une des revendications 1 à 7, **caractérisée en ce que** l'arbre d'index (16) est un arbre quaternaire équilibré.

9. Procédé d'actualisation de géodonnées dans une unité embarquée selon l'une des revendications 1 à 8, comprenant :
l'établissement d'une liste secondaire (25) avec des objets géographiques (obⱼ) et leurs identifications (idⱼ) dans une centrale (12),
l'envoi de la liste secondaire (25), sans arbre d'index (16) et sans liste primaire (19), de la centrale (12) à l'unité embarquée (3),
la réception de la liste secondaire (25) dans l'unité embarquée (3) par l'intermédiaire de l'interface radio (11), et
la mémorisation de la liste secondaire (25) reçue dans la deuxième partie de mémoire d'objets (M₂) de l'unité embarquée (3).

10. Procédé selon la revendication 9 en combinaison avec la revendication 2, **caractérisé en ce qu'**avec chaque liste secondaire (25), également l'identification de la branche (bᵢ), laquelle porte la feuille (lvₘ) avec le renvoi (28) à cette liste secondaire (25), est envoyée conjointement, et la liste secondaire (25) est stockée dans la deuxième partie de mémoire d'objets (M₂) à l'endroit indiqué par ce renvoi (28).
